# EUROPEAN PATENT APPLICATION

(11) **EP 4 360 962 A1**
(43) Date of publication of application: **01.05.2024**
(21) Application number: 22203391.2
(22) Date of filing: 24.10.2022
(51) Int. Cl.: B60R 21/231, B60R 21/2342, B60R 21/237

(54) **SIDE AIR-BAG**

(71) Applicant: Autoliv Development AB, 447 83 Vårgårda (SE)
(72) Inventor: Kreft-Lazarska, Kamila, 85221 Dachau (DE); Schuler, Harald, 85221 Dachau (DE); Siefkes, Richard, 85221 Dachau (DE)
(74) Representative: Forresters IP LLP

(57) **Abstract**

A side air-bag (5) for a motor vehicle comprises an elongate first layer of fabric (6) and an elongate second layer of fabric (7). The second layer of fabric (7) is superimposed on the first layer of fabric (6) to form a chamber (13) between a section (14) of the first layer of fabric (6) and a section (15) of the second layer of fabric (7). The second layer of fabric (7) is wider that the first layer of fabric (6) in a transverse direction that extends transverse to the lengths of the first and second layers of fabric (6, 7). The second layer of fabric (7) is folded with at least one elongate pleat (19). When a gas is introduced into the chamber (13) to inflate the air-bag (5), forces exerted by the gas on the first and second layers of fabric (6, 7) move the section (14) of the first layer of fabric (6) apart from the section (15) of the second layer of fabric (7) and unfold each pleat (19) in the second layer of fabric (7) such that the inflated air-bag (5) has a curved shape to fit around part of an occupant of the motor vehicle.

## Description

### FIELD

The present invention relates to a side air-bag for a motor vehicle. The present invention more particularly relates to a side air-bag to protect an occupant of a vehicle in the event of a crash situation.

### BACKGROUND

A side air-bag is a safety device that is mounted within a vehicle to protect an occupant of the vehicle in the event of a crash situation. A side air-bag is particularly beneficial in protecting an occupant of a vehicle in the event that the vehicle is involved in a side impact.

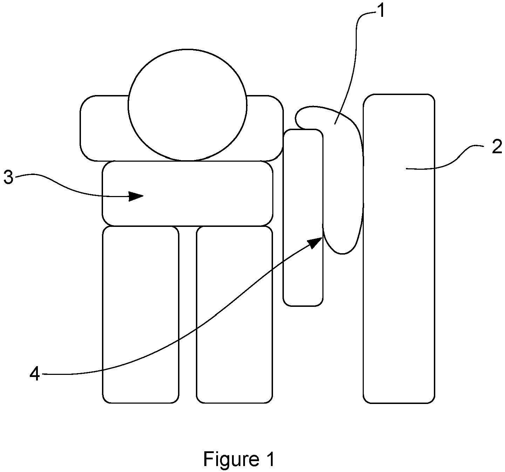

Figure 1 of the accompanying drawings shows a conventional side air-bag 1 in an inflated configuration, after having been deployed. The inflated air-bag 1 is position between a door 2 of the vehicle and an occupant 3 of the vehicle. The air-bag 1 acts as a cushion that restricts movement of the occupant 3 relative to the door 2. The air-bag 1 dissipates kinetic energy of the occupant 3 to minimise the risk of the occupant 3 striking the door 2 during the crash situation.

A problem with side air-bags, such as the air-bag 1 shown in Figure 1, is that the air-bag typically does not contact the torso of the occupant 3 sufficiently. This can lead to high forces being exerted by the inflated air-bag on the arm 4 and the shoulder of the occupant 3, which can in turn cause injury to the arm 4, shoulder or the ribs of the occupant 3.

There is a need for an improved side air-bag that alleviates at least some of the problems outlined herein.

### BRIEF DESCRIPTION OF THE INVENTION

The present invention provides a side air-bag as claimed in claim 1 and a side air-bag module as claimed in claim 7. The present invention also provides preferred embodiments as claimed in the dependent claims.

The air-bag of some examples of this disclosure fills the space between the door of a vehicle and the torso of an occupant of the vehicle fully, thereby stabilising and minimising movement of the occupant of the vehicle during a crash situation.

The air-bag of some examples of this disclosure rotates the arm of an occupant during deployment which leads to more inboard positioning of the inflated air-bag relative to a conventional side air-bag. This further inboard positioning further enhances the protection to the vehicle occupant as compared with a conventional side air-bag.

The air-bag of some examples of this disclosure can be configured easily to inflate in a desired manner for a particular vehicle type by changing the number of pleats and/or the position of the pleats in the air-bag. Such flexibility is not possible with standard conventional side air-bags that are not folded with pleats.

The air-bag of some examples of this disclosure is provided with at least one pleat that unfolds as the air-bag inflates to increase the volume of the air-bag and fully fill the space on one side of an occupant of a vehicle. This avoids the need to add additional chambers to increase the volume of the air-bag that would otherwise increase the weight and packing size of the air-bag.

The air-bag of some examples of this disclosure does not require tethers to be fixed to the air-bag to achieve a curved shape upon inflation of the air-bag. This means that the air-bag can be packed into a smaller enclosure than conventional air-bags that incorporate additional components, such as tethers, baffles or panels.

### BRIEF DESCRIPTION OF THE FIGURES

In orderthatthe present disclosure may be more readily understood, preferable embodiments thereof will now be described, by way of example only, with reference to the accompanying drawings, in which:
FIGURE 1 is a diagrammatic top view of a conventional side air-bag inflated within a vehicle;
FIGURE 2 is a diagrammatic side view of an air-bag of an example of this disclosure;
FIGURE 3 is a further diagrammatic side view of the air-bag of Figure 2;
FIGURE 4 is a further diagrammatic side view of the air-bag of Figure 2;
FIGURE 5 is a diagrammatic top cross-sectional view of the air-bag of Figure 2 in a deflated configuration;
FIGURE 6 is a diagrammatic side view of the air-bag of Figure 2 at an intermediate stage of manufacture;
FIGURE 7 is a diagrammatic top cross-sectional view of the air-bag of Figure 2 after the air-bag has been inflated;
FIGURE 8 is a diagrammatic top view of the air-bag of Figure 2 after having been inflated within a vehicle;
FIGURE 9 is a diagrammatic side view of an air-bag of another example of this disclosure;
FIGURE 10 is a further diagrammatic side view of the air-bag of Figure 9;
FIGURE 11 is a further diagrammatic side view of the air-bag of Figure 9;
FIGURE 12 is an enlarged view of part of Figure 11;
FIGURE 13 is a diagrammatic top cross-sectional view of the air-bag of Figure 9 in a deflated configuration;
FIGURE 14 is a diagrammatic side view of the air-bag of Figure 9 at an intermediate stage of manufacture;
FIGURE 15 is a diagrammatic top cross-sectional view of the air-bag of Figure 9 after the air-bag has been inflated;
FIGURE 16 is a front view of the air-bag of Figure 9 inflated within a vehicle;
FIGURE 17 is a top view of the air-bag of Figure 9 inflated within a vehicle;
FIGURE 18 is a diagrammatic side view of an air-bag of another example of this disclosure;
FIGURE 19 is a further diagrammatic side view of the air-bag of Figure 18;
FIGURE 20 is a diagrammatic top cross-sectional view of the air-bag of Figure 18 in a deflated configuration;
FIGURE 21 is a diagrammatic side view of the air-bag of Figure 18 at an intermediate stage of manufacture;
FIGURE 22 is a diagrammatic top cross-sectional view of the air-bag of Figure 18 after the air-bag has been inflated;
FIGURE 23 is a diagrammatic side view of the air-bag of Figure 18 after the air-bag has been inflated;
FIGURE 24 is a diagrammatic further side view of the air-bag of Figure 18 after the air-bag has been inflated;
FIGURE 25 is a diagrammatic top view of the air-bag of Figure 18 after the air-bag has been inflated;
FIGURE 26 is a diagrammatic top cross-sectional view of an air-bag of another example of this disclosure;
FIGURE 27 is a diagrammatic top cross-sectional view of an air-bag of another example of this disclosure;
FIGURE 28 is a diagrammatic top cross-sectional view of an air-bag of another example of this disclosure;
FIGURE 29 is a diagrammatic side view of an air-bag of another example of this disclosure;
FIGURE 30 is a front view of the air-bag of Figure 29 partially inflated within a vehicle;
FIGURE 31 is a front view of the air-bag of Figure 29 fully inflated within a vehicle; and
FIGURE 32 is a diagrammatic top view of a farside air-bag of some examples of this disclosure after having been inflated within a vehicle.

### DETAILED DESCRIPTION OF THE DISCLOSURE

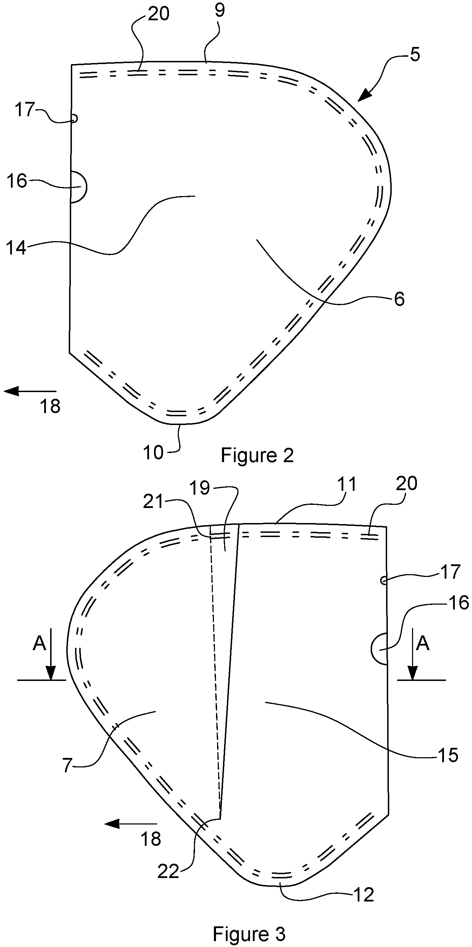

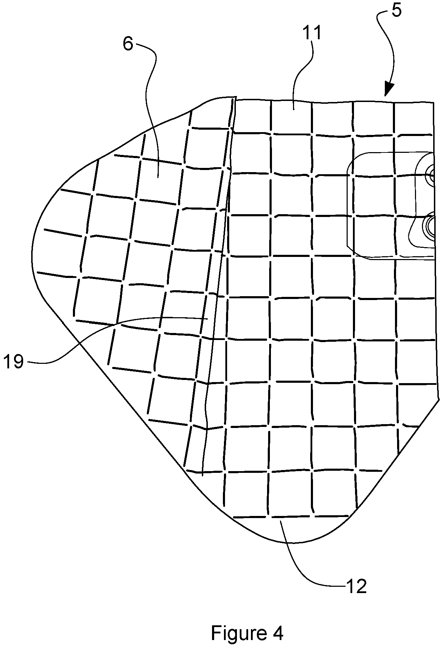

Referring now to Figures 2 to 6 of the accompanying drawings, a side air-bag of an example of this disclosure comprises an elongate first layer of fabric 6 and an elongate second layer of fabric 7. In this example, the first and second layers of fabric 6, 7 are formed integrally with one another and folded along a fold line 8 so that the layers of fabric 6, 7 are superimposed on one another. However, in other examples, the first and second layers of fabric 6, 7 are initially separate but joined to on another during the manufacturing process.

The first and second layers of fabric 6, 7 are elongate in the sense that the first and second layers of fabric 6,7 have a length which extends between a first end 9 and a second end 10 of the first layer of fabric 6 or between a first end 11 and a second end 12 of the second layer of fabric 7.
It is to be appreciated that the first ends 9, 11 are at the top of the air-bag 5 and the second ends 10, 12 are at the bottom of the air-bag 5 when the air-bag is inflated within a vehicle.

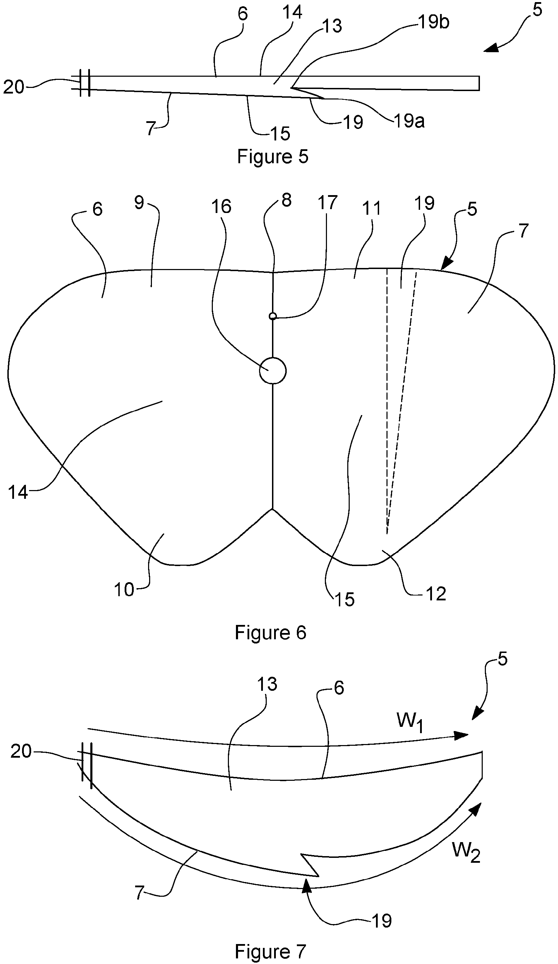

Referring now to Figure 5 of the accompanying drawings, the second layer of fabric 7 is superimposed on the first layer of fabric 6 to form a chamber 13 between a section 14 of the first layer of fabric 6 and a section 15 of the second layer of fabric 7. In this example, the sections 14, 15 of the first and second layers of fabric 6, 7 are central sections of the first and second layers of fabric 6, 7.

The air-bag 5 is provided with a gas inlet aperture 16 which, in this example, is positioned at the fold line 8 between the first and second layers of fabric 6, 7. In this example the air-bag 5 is provided with a mounting aperture 17 in the vicinity of the gas inlet aperture 16 to receive a mounting element to mount a gas generator to the air-bag 5. However, in other examples, the mounting aperture 17 is omitted.

The second layer of fabric 7 is wider than the first layer of fabric 6 in a transverse direction that extends transverse to the lengths of the first and second layers of fabric 6, 7. The transverse direction is generally indicated by arrows 18 in Figures 2 and 3. In this example, the transverse direction 18 is perpendicular or generally perpendicular to a longitudinal axis extending between the first and 9 and the second and 10 of the first layer of fabric and/or the first end 11 and the second end 12 of the second layer of fabric 7.

The second layer of fabric 7 is folded with at least one elongate pleat 19. In this example, the pleat 19 is formed from a first fold 19a and a second fold 19b, which together form a Z-fold in the second layer of fabric 7. However, it will be appreciated that the air-bag of other examples of this disclosure comprises at least one pleat having a different fold shape.

The at least one elongate pleat 19 reduces the overall width of the second layer of fabric 7 so that the second layer of fabric 7 is the same or is a similar width to the first layer of fabric 6, as shown in Figures 2 and 3. Therefore, despite the second layer of fabric having a greater width than the first layer of fabric 6, the at least one pleat allows for the second layer of fabric 7 to sit generally flat when superimposed on the first layer of fabric 6.

During manufacture of the air-bag 5, the first and second layers of fabric 6, 7 are superimposed on one another and the first and second layers of fabric 6, 7 are stitched together along a seam 20 that extends at least partly around periphery of the first layer of fabric 6 and the second layer of fabric 7. The seam 20 provides a gas tight or substantially gas tight seal that minimises or prevents gas from leaking out from the air-bag 5 upon inflation.

In the present example, the pleat 19 has a first end 21 and a second end 22. The first end 21 of the pleat 19 is positioned at the first end 11 of the second layer of fabric 7. The second end 22 of the pleat 19 is spaced apart from the second end 12 of the second layer of fabric 7 and is position at the section 15 of the second layer of fabric. That is to say, the second end 22 of the pleat 19 is spaced apart from the seam 20 at the second end 12 of the second layer of fabric 7 and located at the section 15 of the second layer of fabric that moves apart from the first layer of fabric 6 upon inflation of the air-bag 5.

In this example, the pleat 19 is V-shaped or substantially V-shaped. The V-shape is achieved by the distance over which the second layer of fabric 7 is folded being greater at the first end 21 of the pleat 19 than at the second end 22 of the pleat 19. The V-shape controls the shape of the air-bag 5 upon inflation, such that the upper end of the air-bag 5 at the first ends 9, 11 of the first and second layers of fabric 6, 7 has a wider cross-section than the lower end of the air-bag 5 at the second ends 10, 12 of the first and second layers of fabric 6, 7.

It is to be appreciated that the shape of the pleat 19 of this example is one type of shape and other examples of this disclosure comprise pleats of a different shape. Examples of air-bags of this disclosure having pleats of a different shape and/or a different number of pleats are described below.

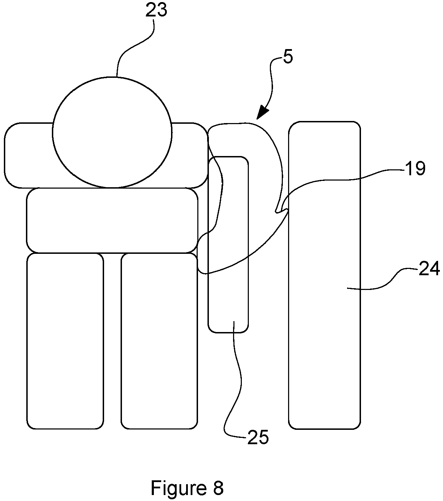

Referring now to Figures 7 and 8 of the accompanying drawings, when a gas is introduced into the chamber 13 to inflate the air-bag 5, forces exerted by the gas on the first and second layers of fabric 6, 7 move the section 14 of the first layer of fabric 6 apart from the section 15 of the second layer of fabric 7. The forces exerted by the gas on the first and second layers of fabric 6, 7 also unfold the or each pleat 19 such that the inflated air-bag 5 as a curved shape to fit around part of an occupant 23 of a motor vehicle, as shown in Figure 8. The curved shape of the air-bag 5 is achieved by the width W₂ of the second layer of fabric 7 being greater than the width W₁ of the first layer of fabric 6, as illustrated in Figure 7.

The air-bag 5 is positioned between a door 24 or a wall of a vehicle and the occupant 23. The curved shape of the air-bag 5 leads to the air-bag 5 exerting a rotational force on an arm 25 of the occupant 23 that moves the occupant arm 25 upwardly. The rotation of the occupant's arm 25 enables the air-bag 5 to fit around the torso of the occupant 23. The air-bag 5 fully fills the space between the torso of the occupant 23 and the door 24 due to the increased volume of the air-bag resulting from each pleat unfolding during inflation of the air-bag. This provides improved stabilisation that minimises movement of the occupant 23 relative to the door 24 and helps minimise injury to the occupant 23 during a crash situation. In addition, the positioning achieved by the curved air-bag 5 minimises forces on the arm and shoulder of the occupant 23 that might otherwise result in injury to the occupant 23.

Air-bags of other examples of this disclosure will now be described. The air-bags of other examples comprise many of the same elements as the air-bag 5 described above and the same reference numbers are used for the equivalent components in the air-bag described below.

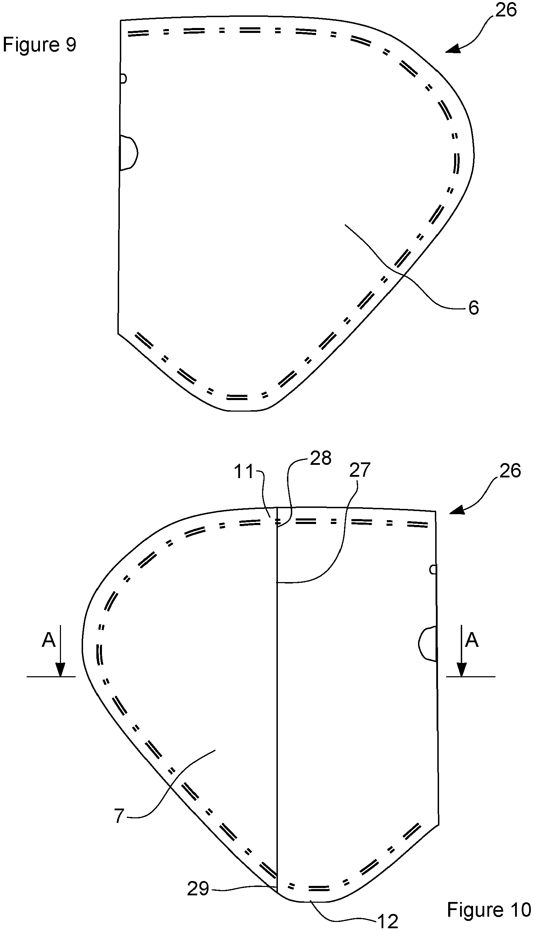

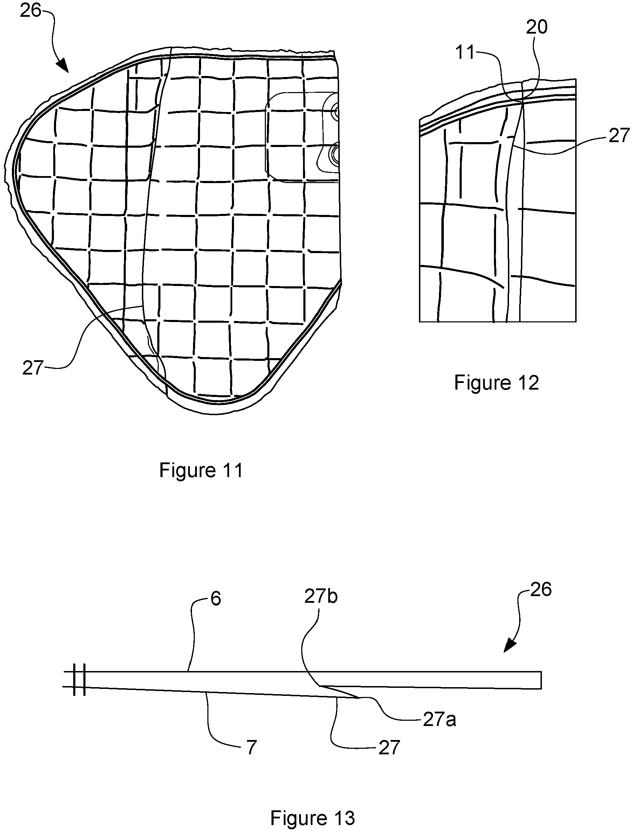

Referring now to Figures 9 to 14 of the accompanying drawings, an air-bag 26 of another example of this disclosure comprises a second layer of fabric 7 that is folded with an elongate pleat 27. A first end 28 of the pleat 27 is positioned at the first end 11 of the second layer of fabric 7 and a second end 29 of the pleat 27 is positioned at the second end 12 of the second layer of fabric 7. In this example, the pleat 27 extends across substantially the entire height of the second layer of fabric 7 between the seam 20 at the first and 11 and the seam 20 at the second and 12 of the second layer of fabric 7.

The pleat 27 of the air-bag 26 is formed by a Z-fold in the second layer of fabric 7. The Z-fold is formed by a first fold 27a in a first fold direction and a second fold 27b in a second fold direction. The first fold direction is in a different direction to the second fold direction. In this example, the first fold direction is opposite to the second fold direction.

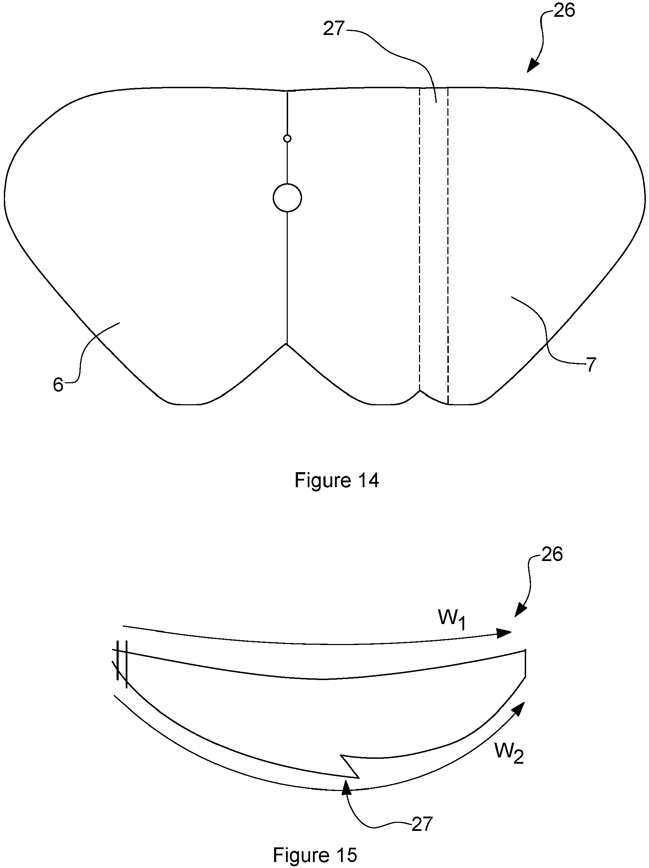

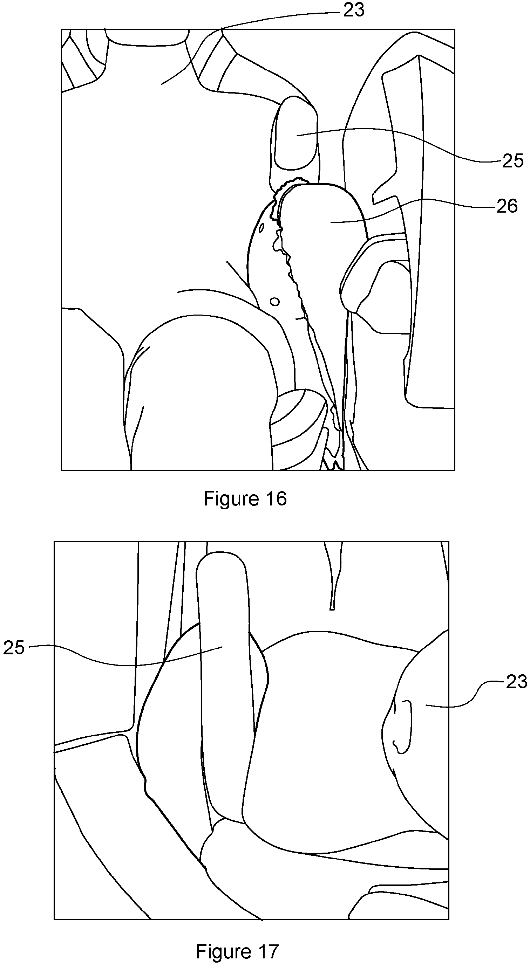

Referring now to Figures 15 to 17 of the accompanying drawings, when the air-bag 26 is inflated, the sections of the first and second layers of fabric 6, 7 move apart from one another and unfold the pleat 27 in the second layer of fabric 7 such that the inflated air-bag 26 has a curved shape to fit around part of an occupant of a motor vehicle, as shown in Figure 17. This provides a similar effect to the air-bag 5 described above in rotating the arm 25 of the occupant 23 upwardly to allow the air-bag 26 to fit around part of the occupant 23.

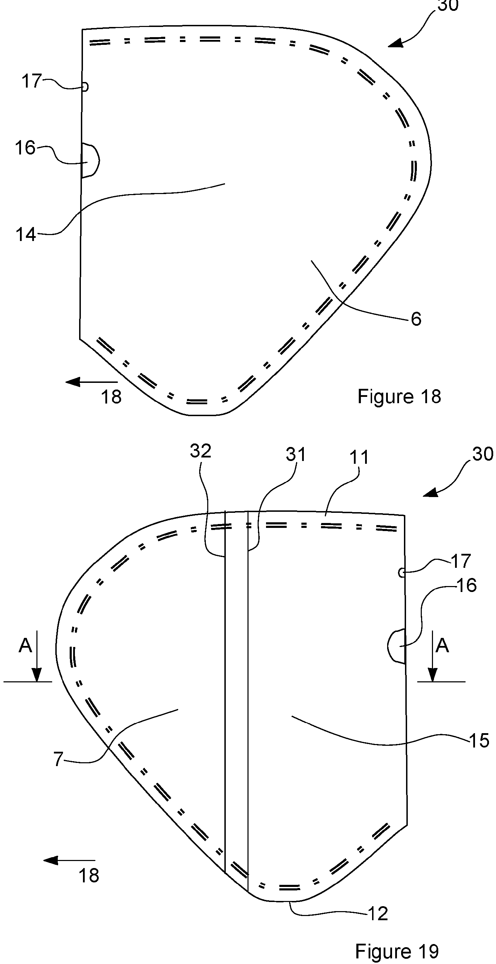

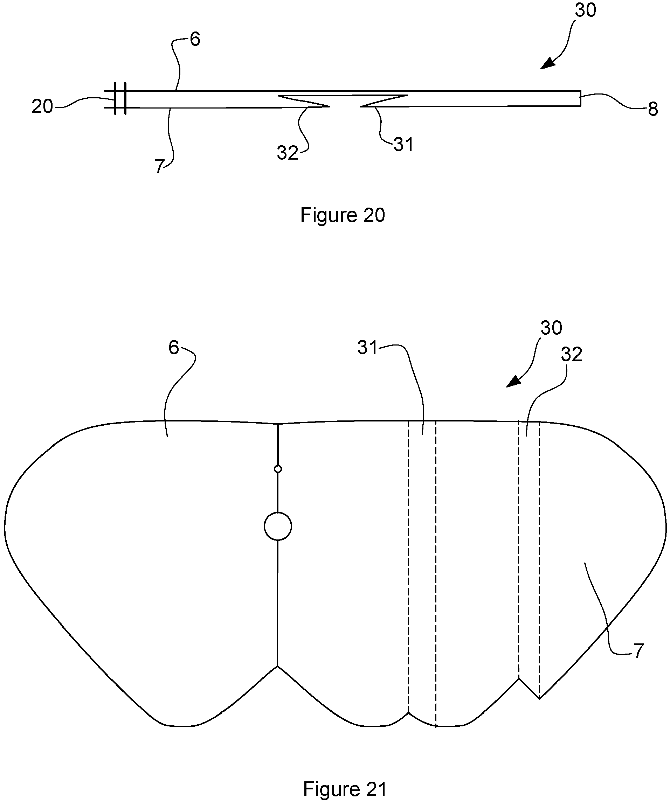

Referring now to Figures 18 to 21 of the accompanying drawings, an air-bag 30 of another example of this disclosure comprises a second layer of fabric 7 that is folded with two elongate pleats 31, 32. The two elongate pleats 31, 32 are folded in opposite directions to one another and are spaced apart from one another. The pleats 31, 32 form an omega fold in the second layer of fabric 7, as shown in Figure 20.

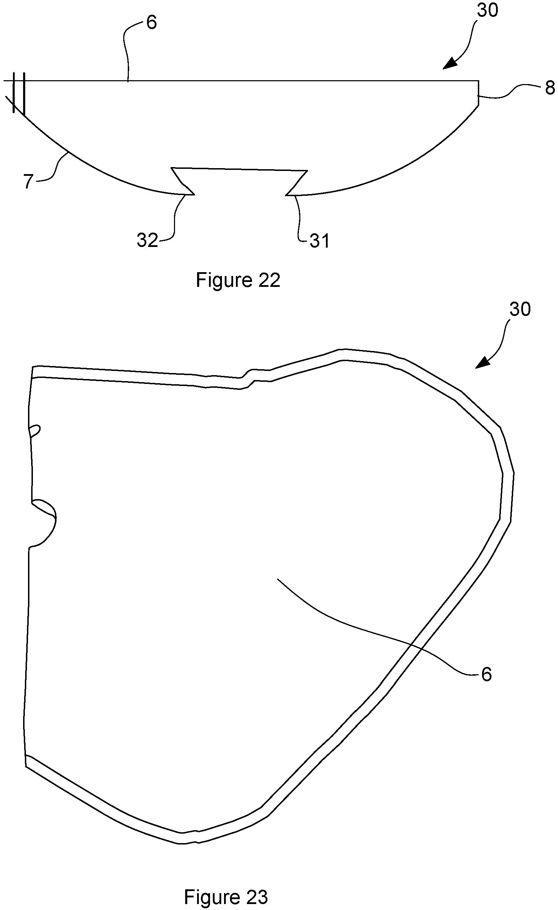

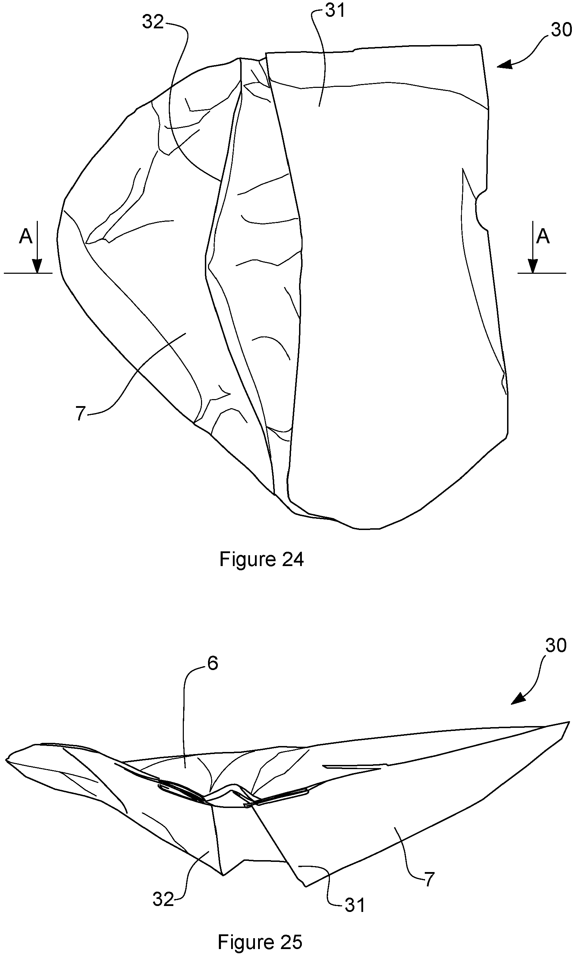

Referring now to Figures 22 to 25 of the accompanying drawings, when the air-bag 30 is inflated, the sections 14, 15 of the first and second layers of fabric 6, 7 move apart from one another and unfold each pleat 31, 32 in the second layer of fabric 7. As with the examples described above, the inflated air-bag 30 has a curved shape to fit around part of an occupant of a motor vehicle. In this example, the spacing between the pleats 31, 32 result in the degree of curvature of the second layer of fabric 7 upon inflation of the air-bag 30 being different from the degree of curvature of the air-bags of the examples described above.

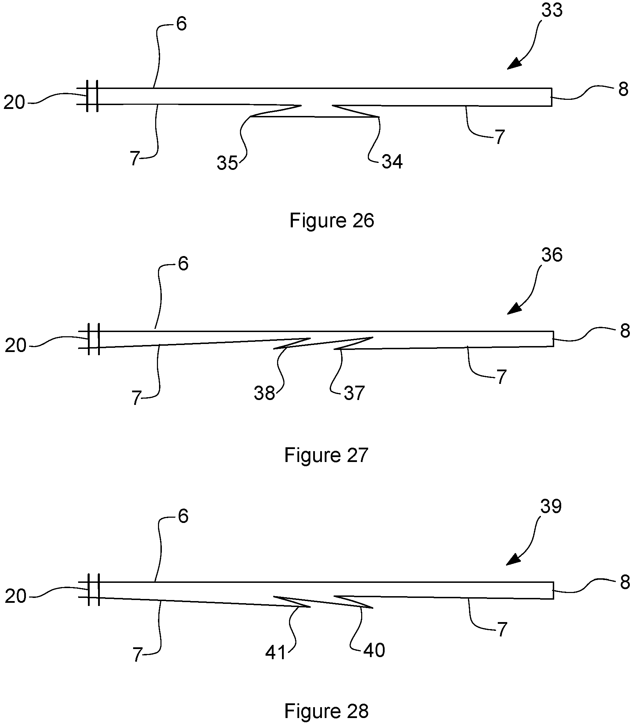

Referring now to Figure 26 of the accompanying drawings, an air-bag 33 of another example of this disclosure comprises a second layer of fabric 7 that is folded with two spaced apart pleats 34, 35. The two spaced apart pleats 34, 35 form an omega fold that is similar to the omega fold of the air-bag 30 described above. However, in this example, the omega fold of the air-bag 33 is reversed such that the folded portions of the pleats 34, 35 project outwardly from the plane of the second layer of fabric 7.

Referring now to Figure 27 of the accompanying drawings, an air-bag 36 of another example of this disclosure comprises a second layer of fabric 7 which is folded with two spaced apart pleats 37, 38. The pleats 37, 38 are folded in substantially the same direction as one another to form two spaced apart Z-folds in the second layer of fabric 7. In this example, the pleats 37, 38 are folded in the same direction as one another, away from the fold line 8 of the air-bag 36.

Referring now to Figure 28 of the accompanying drawings, an air-bag 39 of a further example of this disclosure comprises a second layer of fabric 7 which is provided with two spaced apart pleats 40, 41. The pleats 40, 41 are folded in the same direction as on another and are folded towards the fold line 8 of the air-bag 39.

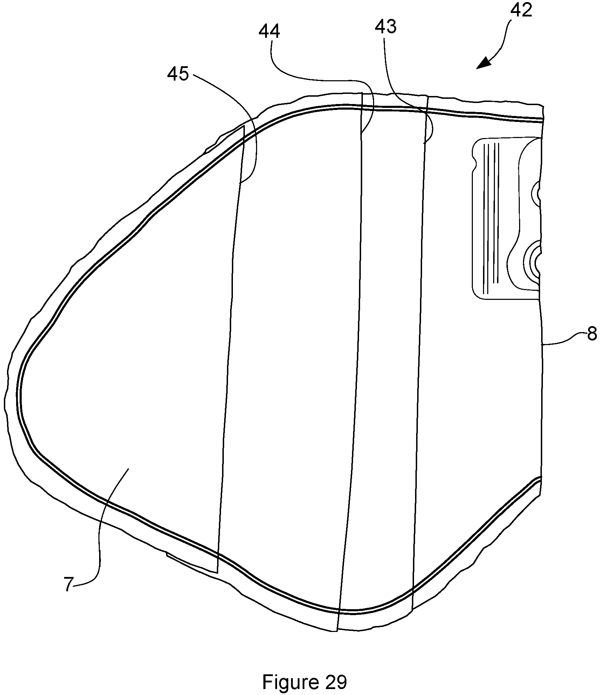

Referring now to Figure 29 of the accompanying drawings, an air-bag 42 of another example of this disclosure comprises three spaced apart pleats 43-45 which are folded in the second layer of fabric 7. In this example, the pleats 43-45 are all folded in the same direction towards the fold line 8 of the air-bag 42. In this example, the first two pleats 43,44 are closer to one another than the spacing between the second pleat 44 and the third pleat 45.

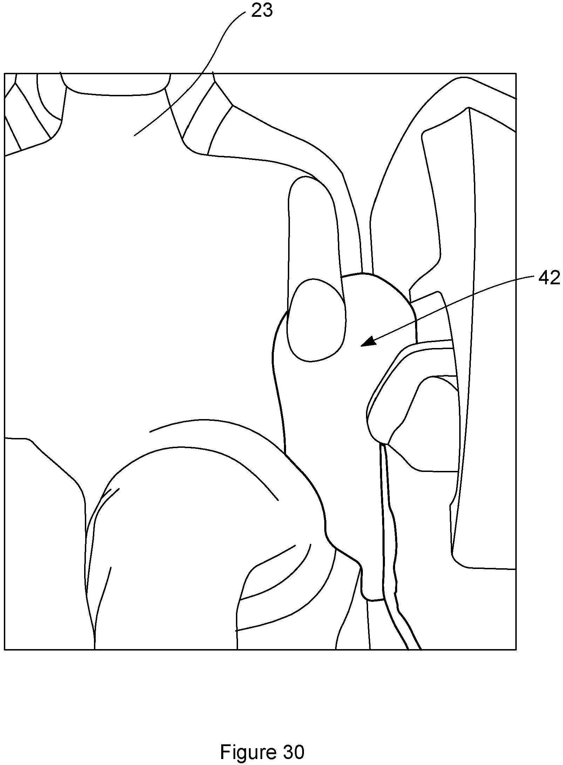

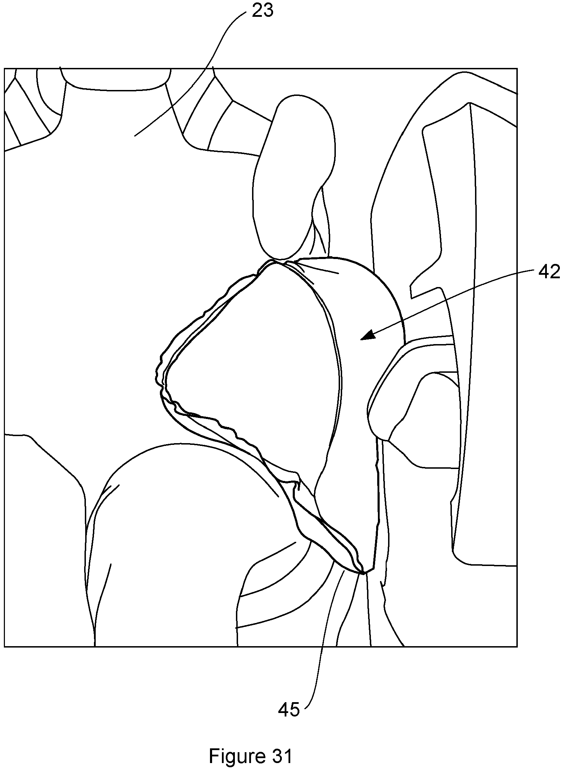

Referring now to Figures 30 and 31 of the accompanying drawings, when the air-bag 42 is inflated, the pleats 43-45 unfold such that the air-bag 42 fits around the torso of an occupant 23 of the vehicle. The three pleats 43-45 of the air-bag 42 of this example provide an increased degree of curvature of the inflated air-bag 42 relative to the examples described above that have fewer than three pleats in the second layer of fabric 7.

It will be appreciated that air-bags of some examples of this disclosure are provided with one pleat or a plurality of pleats in the second layer of fabric 7 to achieve a desired degree of curvature of the air-bag upon inflation. The type of fold and the number and spacing of the pleats is selected to achieve a desired degree of curvature of the inflated air-bag to provide an appropriate restraint for an occupant of a vehicle.

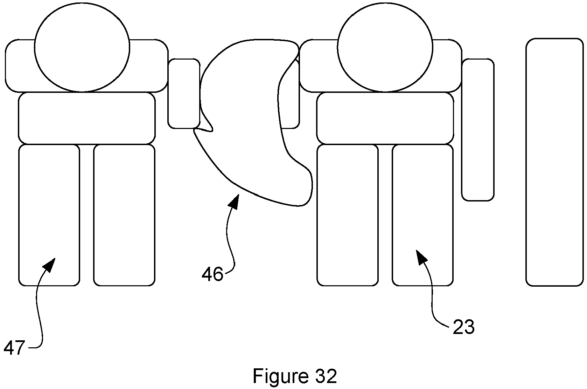

While the air-bags of the examples described above are nearside air-bags, to be inflated between an occupant of a vehicle and the door or side wall of a vehicle, an air-bag 46 of other examples of this disclosure is a farside air-bag to be inflated centrally within a vehicle between two seats, as shown in Figure 32. The farside air-bag 46 is of the same configuration and comprises the same elements as the other air-bags described above to ensure that the air-bag 46 has a curved shape upon inflation. In this example, the air-bag 46 fits around part of an occupant 23 and stabilises the occupant 23 to minimise movement of the occupant 23 during a crash situation. The stabilisation provided by the inflated air-bag 46 reduces the risk of injury to the occupant 23 by minimising or preventing the occupant 23 from moving towards the centre of the vehicle and potentially striking an adjacent passenger 47.

In another example of this disclosure, an air-bag of the type described above comprises an insert or gas diffuser that is coupled to the air-bag adjacent to the gas inlet opening 16. The insert is configured to be mounted to a gas generator.

In a further example of this disclosure, a side air-bag module comprises an enclosure, a gas generator and an air-bag of one of the examples described above. The gas generator is mounted to an insert that is coupled to the air-bag and the air-bag is folded and received within the enclosure. In some examples, the enclosure is a flexible wrap but in other examples the enclosure is a rigid plastic housing.

The configuration of the air-bag with at least one pleat enables the air-bag to inflate to a greater volume as each pleat unfolds upon inflation of the air-bag as compared with an air-bag without pleats. This enables the air-bag to fully fill the space between an occupant of a vehicle and the door of the vehicle (in the case of a nearside air-bag) or the space between the occupant and a passenger (in the case of a farside air-bag). The at least one pleat achieves the greater inflation volume without needing to add additional chambers to the air-bag, which would undesirably increase the size and shape of the air-bag.

The configuration of the air-bag with at least one pleat reduces the packing space required for the air-bag as compared with a conventional air-bag that incorporates tethers achieve a curved inflated shaped. This helps minimise the overall size of the enclosure of the air-bag module. Furthermore, it is easier to manufacture the air-bag of examples of this disclosure with at least one pleat compared with other air-bags that require additional components, such as tethers, baffles or panels to be attached within the air-bag to control the shape of the inflated air-bag.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

### REPRESENTATIVE FEATURES

Representative features are set out in the following clauses, which stand alone or may be combined, in any combination, with one or more features disclosed in the text and/or drawings of the specification.
1. A side air-bag for a motor vehicle, the air-bag comprising: an elongate first layer of fabric; and an elongate second layer of fabric, the second layer of fabric being superimposed on the first layer of fabric to form a chamber between a section of the first layer of fabric and a section of the second layer of fabric, wherein: the second layer of fabric is wider that the first layer of fabric in a transverse direction that extends transverse to the lengths of the first and second layers of fabric, and the second layer of fabric is folded with at least one elongate pleat, wherein, when a gas is introduced into the chamber to inflate the air-bag, forces exerted by the gas on the first and second layers of fabric move the section of the first layer of fabric apart from the section of the second layer of fabric and unfold each pleat in the second layer of fabric such that the inflated air-bag has a curved shape to fit around part of an occupant of the motor vehicle.
2. The air-bag of clause 1, wherein the second layer of fabric is folded with a plurality of elongate pleats that are spaced apart from one another.
3. The air-bag of clause 1 or clause 2, wherein the first layer of fabric and the second layer of fabric are formed integrally with one another and folded to superimpose the first layer of fabric on the second layer of fabric, and wherein the first layer of fabric is stitched to the second layer of fabric along a seam which extends at least partly around the periphery of the first layer of fabric and the second layer of fabric.
4. The air-bag of any one of the preceding clauses, wherein the air-bag is configured to be mounted in a vehicle so that, upon inflation, the inflated air-bag is positioned between an occupant of the vehicle and a side of the vehicle.
5. The air-bag of any one of clauses 1 to 3, wherein the air-bag is configured to be mounted centrally within in a vehicle so that, upon inflation, the inflated air-bag is positioned between two seats of the vehicle.
6. The air-bag of any one of the preceding clauses, wherein the air-bag is provided with a gas inlet aperture and an insert coupled to the air-bag adjacent to the gas inlet aperture, the insert being configured to be mounted to a gas generator.
7. A side air-bag module comprising: an enclosure; a gas generator; and the air-bag of clause 6, wherein the gas generator is mounted to the insert and the air-bag is folded and received within the enclosure.

## Claims

1. A side air-bag for a motor vehicle, the air-bag comprising:
an elongate first layer of fabric (6); and
an elongate second layer of fabric (7), the second layer of fabric (7) being superimposed on the first layer of fabric (6) to form a chamber (13) between a section (14) of the first layer of fabric (6) and a section (15) of the second layer of fabric (7), wherein:
the second layer of fabric (7) is wider that the first layer of fabric (6) in a transverse direction that extends transverse to the lengths of the first and second layers of fabric (6, 7), and
the second layer of fabric (7) is folded with at least one elongate pleat (19), wherein, when a gas is introduced into the chamber (13) to inflate the air-bag, forces exerted by the gas on the first and second layers of fabric (6, 7) move the section (14) of the first layer of fabric (6) apart from the section (15) of the second layer of fabric (7) and unfold each pleat (19) in the second layer of fabric (7) such that the inflated air-bag has a curved shape to fit around part of an occupant of the motor vehicle.

2. The air-bag of claim 1, wherein the second layer of fabric (7) is folded with a plurality of elongate pleats that are spaced apart from one another.

3. The air-bag of claim 1 or claim 2, wherein the first layer of fabric (6) and the second layer of fabric (7) are formed integrally with one another and folded to superimpose the first layer of fabric (6) on the second layer of fabric (7), and wherein the first layer of fabric (6) is stitched to the second layer of fabric (7) along a seam (20) which extends at least partly around the periphery of the first layer of fabric (6) and the second layer of fabric (7).

4. The air-bag of any one of the preceding claims, wherein the air-bag is configured to be mounted in a vehicle so that, upon inflation, the inflated air-bag is positioned between an occupant of the vehicle and a side of the vehicle.

5. The air-bag of any one of claims 1 to 3, wherein the air-bag is configured to be mounted centrally within in a vehicle so that, upon inflation, the inflated air-bag is positioned between two seats of the vehicle.

6. The air-bag of any one of the preceding claims, wherein the air-bag is provided with a gas inlet aperture (16) and an insert coupled to the air-bag adjacent to the gas inlet aperture (16), the insert being configured to be mounted to a gas generator.

7. A side air-bag module comprising:
an enclosure;
a gas generator; and
the air-bag of claim 6, wherein the gas generator is mounted to the insert and the air-bag is folded and received within the enclosure.
